Europäisches Patentamt

European Patent Office

Office européen des brevets

(11) Veröffentlichungsnummer: **0 274 573 B1**

# EUROPÄISCHE PATENTSCHRIFT

(45) Veröffentlichungstag der Patentschrift: **22.05.91**

(51) Int. Cl.⁵: **G01D 3/02**

(21) Anmeldenummer: **87114339.2**

(22) Anmeldetag: **01.10.87**

(54) Vorrichtung zur Erzeugung einer einheitlichen Kennlinie für Sensoren.

(30) Priorität: **13.10.86 DE 3634854**

(43) Veröffentlichungstag der Anmeldung:
**20.07.88 Patentblatt 88/29**

(45) Bekanntmachung des Hinweises auf die
Patenterteilung:
**22.05.91 Patentblatt 91/21**

(84) Benannte Vertragsstaaten:
**BE DE FR GB IT**

(56) Entgegenhaltungen:
**DE-A- 3 030 990**
**DE-A- 3 535 642**

(73) Patentinhaber: **Degussa Aktiengesellschaft**
**Weissfrauenstrasse 9**
**W-6000 Frankfurt am Main 1(DE)**

(72) Erfinder: **Dietz, Reinhard**
**Hopfenstrasse 1**
**W-6450 Hanau 1(DE)**
Erfinder: **Hohenstatt, Martin**
**Unter den Weingärten 9**
**W-6451 Hammersbach(DE)**
Erfinder: **Kayser, Thomas**
**Mainstrasse 9**
**W-6057 Dietzenbach 2(DE)**

(74) Vertreter: **Stoffregen, Hans-Herbert, Dr.**
**Dipl.-Phys.**
**Patentanwalt, Salzstrasse 11 a, Postfach 21**
**44**
**W-6450 Hanau (Main) 1(DE)**

## Beschreibung

Die Erfindung bezieht sich auf eine Vorrichtung zur Erzeugung einer korrigierten Kennlinie für Sensoren, die jeweils unmittelbar oder über eine nachgeschaltete Anordnung Signale erzeugen, die von einer veränderlichen Meßgröße abhängen und einer Korrekturschaltungsanordnung zugeführt werden, die einen von meßgrößenabhängigen Signalen beaufschlagten Analog-Digital-Umsetzer aufweist, dessen Ausgänge an die Adresseneingänge eines Speichers angeschlossen sind, in dem adressenabhängig Korrektur-Digitalwerte gespeichert sind und dessen Ausgänge mit einem Digital-Analog-Umsetzer verbunden sind.

Ein Vorrichtung der vorstehend beschriebenen Gattung ist aus der DE-A-30 30 990 bekannt. Die bekannte Vorrichtung enthält ein Thermoelement, an das ein Filter angeschlossen ist, dem ein Verstärker nachgeschaltet ist, der ausgangsseitig mit einem Widerstand eines Summierverstärkers verbunden ist. An den Verstärker ist ein weiterer Summierverstärker über einen ersten Widerstand angeschlossen. Über einen zweiten Widerstand ist der weitere Summierverstärker eingangsseitig an einen Dreieckspannungsgenerator angeschlossen. Dem weiteren Summierverstärker ist der Analog-Digital-Umsetzer nachgeschaltet, der den Speicher ansteuert, dem der Digital-Analog-Umsetzer nachgeschaltet ist, der über einen Widerstand an den ersten Summierverstärker angeschlossen ist. Der Speicher enthält Digital-Korrekturwerte zur Linearisierung der nichtlinearen Kennlinie des Thermoelements. Am Augang des als Tiefpaß-geschalteten Summierverstärkers steht ein korrigiertes Signal an.

Bekannt ist auch eine Einrichtung zur Korrektur von Meßwerten mit einem Meßwertaufnehmer, der über ein elektrisches Meßgerät an einen Analog-Digital-Umsetzer angeschlossen ist, dem ein Mikroprozessor nachgeschaltet ist. Der Mikroprozessor enthält einen Datenspeicher mit Korrekturwerten, die zur Linearisierung der Kennwerte und der durch die Meßapparatur bedingten Fehler vorgesehen sind (DE-A-35 35 642).

Bei bestimmten Sensoren, die zum Beispiel für Hitzdraht- oder Heißfilm-anemometer benötigt werden, ist es praktisch nicht möglich, die Sensoren mit übereinstimmenden Kennlinien zu fertigen. Gewöhnlich treten bei den Sensoren Exemplarstreuungen von etwa + 10% auf.

Aufgrund hoher Ansprüche an die Genauigkeit der Kennlinien und wegen des Austauschs der Sensoren, die in größeren Stückzahlen hergestellt werden , ist eine Korrektur der Kennlinien der Sensoren notwendig. Die Kennlinien vieler Sensoren sind nichtlinear. Bei der Weiterverarbeitung der Sensorsignale wird häufig eine Linearisierung benötigt. Es werden deshalb Schaltungen zur Linearisierung der Sensorausgangssignale eingesetzt. Es ist möglich, eine Korrektur mit der Linearisierung zu kombinieren. Wenn aber zwischen dem jeweiligen Sensor und einer weiterverarbeitenden Schaltung längere Übertragungsstrecken notwendig sind (z. B. bei verfahrenstechnischen Anlagen oder auch in Fahrzeugen), kann es zweckmäßig sein, die Linearisierungs-Schaltung vom Sensor zu trennen, wenn dessen Kennlinienverlauf degressiv ist. Bei der Übertragung des nichtlinearen Signals machen sich dann vor allem im unteren Kennlinienbereich Störungen weniger bemerkbar.

Hitzdraht- und Heißfilmanemometer enthalten Brückenschaltungen. Durch Änderung der Brückenwiderstände kann die Übertemperatur des beheizten Widerstandes variiert werden. Hiermit ist eine Änderung des Offset und der Steigung der Kennlinie verbunden. Eine Entkopplung dieser beiden Größen sowie gezielte Änderungen in bestimmten Abschnitten der Kennlinie sind auf diese Weise nicht möglich. Bekannt ist eine Luftmassenmeßeinrichtung für Brennkraftmaschinen, bei der zur Korrektur eine einstellbare Diagonalspannung verwendet wird (DE-A-31 06 508).

Bekannt sind auch analoge Korrekturmethoden für Meßumformer, bei denen das Spannungssignal des jeweiligen Sensors in Steigung und Offset getrennt verändert werden kann. Beispiele hierfür sind in der EP-A-0172440 angegeben. Um eine gezielte Änderung in bestimmten Abschnitten der Kennlinie vorzunehmen, kann ein Diodenfunktionsgenerator verwendet werden. Pro Kennlinienabschnitt werden eine Diode und zwei Widerstände benötigt. Der Schaltungsaufwand für die Korrektur und den Abgleich ist bei diesen analogen Methoden sehr hoch. Außerdem ergeben sich durch Bauteile Toleranzungenauigkeiten. Fehler in der Korrektur beeinflussen zudem unabhängig vom Umfang der Korrektur voll das Ergebnis ("technisches Messen atm", 1976, Heft 11, Seiten 349 bis 356).

Der Erfindung liegt die Aufgabe zugrunde, eine Vorrichtung der eingangs beschriebenen Gattung dahingehend weiterzuentwickeln, daß die Signale des jeweiligen Sensors oder der diesem nachgeschalteten Anordnung mit auf die Erzeugung einer einheitlichen, bauteiletoleranzunabhängigen Kennlinie gerichteten Korrektursignalen korrigiert werden und in korrigierter Form mit möglichst geringem Aufwand an Leitungen zu einer Auswertanordnung übertragen werden, die vom Sensor und der diesem nachgeschalteten Anordnung sowie der Korrekturschaltungsanordnung entfernt ist.

Die Aufgabe wird erfindungsgemäß dadurch gelöst, daß als Sensor ein beheizbarer Widerstandstemperaturfühler in einem Zweig einer Brücken-schaltung angeordnet ist, an deren Brükkendiagonale ein Differenzverstärker angeschlos-

sen ist, dem ein die Betriebsspannung an der Brückenschaltung beeinflussendes Stellglied nachgeschaltet ist, das zwischen einem Anschluß der Brückenschaltung und einer von einem Pol einer Betriebsspannungsquelle gespeisten Leitung angeordnet ist, an die ein Eingang der Korrekturschaltungsanordnung angeschlossen ist, welche über einen Ausgang gemeinsam mit dem anderen Anschluß der Brückenschaltung an eine weitere Leitung angeschlossen ist, die über einen Stromfühler mit dem anderen Pol der Betriebsspannungsquelle verbunden ist, daß die Korrektur-Digitalwerte im Speicher auf eine einheitliche, bauteiletoleranzunabhängige Kennlinie für den Widerstandstemperaturfühler eingestellt sind, daß dem Digital-Analog-Umsetzer ein Spannungs-Strom-Wandler nachgeschaltet ist, dessen Ausgang mit dem Ausgang der Korrekturschaltung verbunden ist, und daß der Widerstandstemperaturfühler mit dem oder den Eingängen des Analog-Digital-Umsetzers verbunden ist.

Durch diese Vorrichtung können mit nur zwei Leitungen zwischen dem Einsatzort des Sensors bzw. der diesem nachgeschalteten Einrichtung bauteiletoleranzunabhängige Meßwerte von Sensor bzw. der nachgeschalteten Anordnung zur Auswertanordnung für die Meßwerte übertragen werden. Das Signal vom Sensor bzw. der diesem nachgeschalteten Anordnung und das Korrektursignal werden einander überlagert. Hieraus ergibt sich der Vorteil, daß Fehler infolge der Korrektur nur das Korrektursignal beeinflussen können, das ein Bruchteil des Signals des Sensors bzw. der Anordnung ist. Daher sind diese Fehler für das korrigierte Signal vernachlässigbar klein. Die Auflösung der Korrektur kann durch entsprechende digitale Werte ohne großen Aufwand verbessert werden. Außerdem wirken sich Bauteiletoleranzen nicht ungünstig auf die Korrekturwerte aus. Die Schnelligkeit der Korrektur des Signals des Sensors bzw. der Anordnung hängt im wesentlichen von der Geschwindigkeit der Analog-Digital-Umwandlung ab. Falls notwendig, kann ein nach dem Parallelverfahren arbeitender Analog-Digital-Umsetzer eingesetzt werden, so daß die korrigierten Signale sehr schnell zur Verfügung stehen. Abhängig vom momentanen Sensorsignal wird ein digitaler Korrekturwert erzeugt, der nach der Digital-Analogumwandlung dem Sensorsignal hinzugefügt wird.

Die Auflösung des Sensorsignalwerts und des Korrekturwerts kann beliebig hoch gewählt werden. Zweckmäßig ist eine Auflösung von 8 Bit. Die Anordnung hat den Vorteil, daß der gesamte Strom als eingeprägter Strom zur Verfügung gestellt wird, der über eine Zweidrahtleitung übertragen werden kann.

Bei einer bevorzugten Ausführungsform ist vorgesehen, eine an sich bekannte elektronische Regelschaltung eines Hitzdraht- bzw. Heißfilmanemometers mit einer entsprechenden Korrekturschaltung zu verbinden. Ein temperaturabhängiger Widerstand - in thermischem Kontakt mit einem strömenden Medium - ist Bestandteil einer Brückenschaltung, deren Diagonalspannung an einen Differenzverstärker angeschlossen ist, der über ein Stellglied die Betriebsspannung der Brücke so beeinflußt, daß der temperaturabhängige Widerstand auf konstante Temperatur beheizt wird. Diese Heizung kompensiert die strömungsabhängige Kühlung durch das Medium. Die Anordnung eignet sich zur Messung des Massenstroms. Als Maß dient der Strom durch die Brücke. Eine zu diesem Strom proportionale Spannung ist an den oder die Eingänge des Analog-DigitalUmsetzers der Korrekturschaltung gelegt. Unterschiede in den Kennlinien verschiedener temperaturabhängiger Widerstände werden durch unterschiedliche digitale Korrekturwerte ausgeglichen. Einem bestimmten temperaturabhängigen Widerstand entspricht eine bestimmte Korrekturwert-Tabelle. Beim Austausch des temperaturabhängigen Widerstands werden die Korrekturwerte geändert. Dies kann z. B. durch eine neue Programmierung des Festwertspeichers erfolgen, wenn dieser ein EPROM ist. Es können auch die Festwertspeicher ausgetauscht werden. Aufgrund der einheitlichen Kennlinien ist in den nachgeschalteten Geräten eine schnellere und leichtere Verarbeitung der Sensorsignale möglich.

Vorzugsweise sind im Speicher adressenabhängig Korrekturwerte kombiniert mit Werten zur Linearisierung der Kennlinie gespeichert. Mit dieser Maßnahme können einerseits die Bauteiletoleranzen der Sensoren ausgeglichen und andererseits deren Kennlinien linearisiert werden.

Die Erfindung wird im folgenden an Hand eines in einer Zeichnung dargestellten Ausführungsbeispiels näher erläutert, aus dem sich weitere Einzelheiten, Merkmale und auch Vorteile ergeben.

Es zeigen:

Fig. 1    ein Schaltbild einer Vorrichtung zur Messung von strömenden Medien nach dem Meßprinzip eines thermischen Anemometers und

Fig. 2    Einzelheiten der in Fig. 1 dargestellten Vorrichtung.

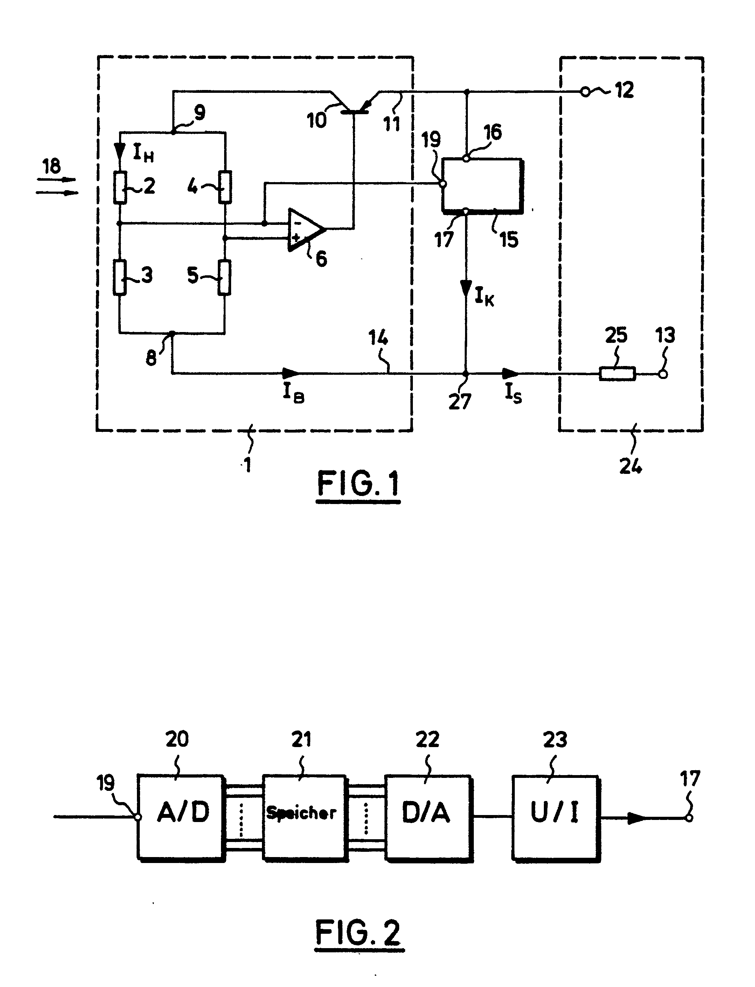

In Fig. 1 ist mit (1) der prinzipielle Aufbau der Regelschaltung eines Hitzdraht- oder Heißfilmanemometers dargestellt. Ein temperaturabhängiger Widerstand (2) und weitere Widerstände (3, 4, 5) sind in an sich bekannter Weise Bestandteil einer Brückenschaltung. Die Brückendiagonale ist mit dem Eingang eines Differenzverstärkers (6) verbunden, dessen Ausgang an die Basis eines Transistors (10) angeschlossen ist. Der Anschluß (9) der Brückenschaltung ist über die Kollektor-Emitter-Strecke des Transistors (10) an eine Leitung (11) angeschlossen, die mit dem positiven Pol (12) einer Betriebsspannungsquelle (24) verbunden ist. Der negative Pol (13) der Betriebsspannungsquelle (24) ist über eine Leitung (14) mit dem anderen Anschluß (8) der Brückenschaltung verbunden.

Der Abgriff zwischen dem in einer Brückenhälfte angeordneten temperaturabhängigen Widerstand (2) und dem Widerstand (3) ist nicht nur an den invertierenden Eingang des Differenzverstärkers (6), sondern auch an den Eingang (19) einer digitalen Korrekturschaltung (15) angeschlossen, die ferner über einen Eingang (16) mit der Leitung (11) und über einen Ausgang (17) mit der Leitung (14) verbunden ist.

Bei dem temperaturabhängigen Widerstand (2) handelt es sich vorzugsweise um einen Hitzdraht oder Heißfilm. Er wird durch den Strom $I_H$ beheizt und gleichzeitig durch das strömende Medium, dargestellt durch die Pfeile (18) strömungsabhängigen gekühlt. Die Regelschaltung (1) steuert den Strom $I_H$ so, daß der temperaturabhängige Widerstand (2) auf konstante Temperatur geregelt wird. Zur Kompensation von Änderungen der Temperatur des strömenden Mediums verwendet man für den Widerstand (4) vorzugsweise einen temperaturabhängigen Widerstand mit geeignetem Temperaturkoeffizienten, der sich ebenfalls in thermischem Kontakt mit dem strömenden Medium befindet. Bei bekanntem Strömungsquerschnitt, in dem sich der beheizte Widerstand (2) befindet, ist der Brückenstrom $I_B$ ein Maß für den Massenstrom, der durch diesen Strömungsquerschnitt fließt.

Die digitale Korrekturschaltung (15) verknüpft den momentanen Spannungswert an ihrem Eingang (19), der dem jeweiligen Brückenstrom $I_B$ proportional ist, mit einem Korrekturstrom $I_K$. Die Summenbildung im Knotenpunkt (27) aus Brückenstrom $I_B$ und Korrekturstrom $I_K$ ergibt den Signalstrom $I_S$, der dem einer einheitlichen Kennlinie unabhängig von Bauteiltoleranzen z.B. des temperaturabhängigen Widerstands (2) entspricht. Dieser Strom $I_S$ wird als eingeprägter Strom übertragen und in der Betriebsspannungsquelle (24) durch einen Stromfühler (26) erfaßt und weiterverarbeitet.

Die digitale Korrekturschaltung (15), die in Fig. 2 im einzelnen dargestellt ist, enthält einen mit der Regelschaltung (1) über einen Eingang (19) verbundenen Analog-Digital-Umsetzer (20), dessen Ausgangssignale Adressen für einen Speicher (21) sind, in dem sich, den jeweiligen Adressen zugeordnet, digitale Korrekturwerte befinden. Die Korrekturwerte ergänzen die Meßwerte zu einer einheitlichen Kennlinie, die nicht mehr von Bauteiletoleranzen abhängig ist. Vorzugsweise sind im Speicher (21) kombiniert mit den Korrekturwerten auch Werte enthalten, über die die Kennlinie linearisiert wird. Vom Aufwand her ist günstig, einen Analog-Digital-Umsetzer (20) mit einer Datenbreite von 8 Bit zu verwenden, so daß das Signal am Eingang (19) in $2^8$ = 256 Stufen quantisiert wird, was für die meisten Anwendungsfälle ausreichend genau ist. Es können bedarfsweise jedoch auch größere Datenbreiten verwendet werden. Die Ausgangssignale des Analog-Digital-Wandlers (20) beaufschlagen die Adresseneingänge des Speichers (21), der vorzugsweise ein EPROM ist, dessen Ausgänge mit Eingängen eines Digital-Analog-Umsetzers (22) verbunden sind. Dem Umsetzer (22) ist ein Spannungs-Strom-Wandler (23) nachgeschaltet, dessen Ausgang mit dem Ausgang (17) der Korrekturschaltung (15) verbunden ist.

Der Speicher (21) enthält somit eine adressierbare Tabelle, in der jedem quantisierten Wert des Sensorsignals ein Korrekturwert und, falls erwünscht, ein Linearisierungswert zugeordnet ist.

Der nachgeschaltete Digital-Analog-Umsetzer (22) und der Spannungs-Strom-Wandler (23) erzeugen aus diesem Korrekturwert den analogen Korrekturstrom $I_K$.

Die Korrekturtabelle wird für jede Regelschaltung (1) mit ihrem speziellen temperaturabhängigen Widerstand (2) individuell erstellt. Hierfür wird in mehreren Massenstrompunkten der Brückenstrom $I_B$ gemessen und daraus durch Interpolation zwischen den Meßpunkten eine Kennlinientabelle erstellt, die eine vorgegebene Auflösung von vorzugsweise 8 Bit im Brückenstrom aufweist. Durch Vergleich mit einer vorgegebenen Sollkennlinie wird für jeden Stromwert der Kennlinientabelle ein Korrekturwert ermittelt. Dadurch erhält man eine Korrekturtabelle derselben Auflösung, z.B. 8 Bit. Diese Korrekturtabelle wird in einem Speicher, z.B. einem EPROM gespeichert. Es kann auch ein PROM oder EEPROM verwendet werden.

Wenn die Kennlinie ein nicht verschwindendes Nullsignal aufweist, wird vorzugsweise zur Verbesserung der Auflösung dem Analog-Digital-Umsetzer (20) ein Differenzverstärker vorgeschaltet, der von der Sensorspannung eine einstellbare Offset-Spannung abzieht. Es kann auch ein Analog-Digital-Umsetzer mit einem Differenzeingang verwendet werden.

Die Vorteile der oben beschriebenen digitalen Korrektur durch Stromaddition sind:

Der über die Brückenschaltung fließende Strom $I_B$ geht direkt als Summand in das Ausgangssignal $I_S$ ein. Fehler durch die Korrektur können sich nur auf den Korrekturstrom $I_K$ auswirken, der selbst nur einen Bruchteil des Ausgangsstroms $I_S$ darstellt. Daher sind diese Fehler vernachlässigbar klein. Die Auflösung der Korrektur wird ohne großen Schaltungs- und Abgleichaufwand verbessert. Die Genauigkeit der Korrektur wird nicht durch Bauteiletoleranzen beschränkt. Der Sensor ist bei der oben beschriebenen Vorrichtung der temperaturabhängige Widerstand (2). Es können jedoch auch andere Meßwertumformer als Sensoren eingesetzt werden. Häufig werden die Sensorsignale zuerst einer Schaltungsanordnung, z. B. einem Vorverstärker, zugeführt, bevor sie die digitale Korrekturschaltung beaufschlagen.

## Ansprüche

1. Vorrichtung zur Erzeugung einer korrigierten Kennlinie für Sensoren, die jeweils unmittelbar oder über eine nachgeschaltete Anordnung Signale abgeben, die von einer veränderlichen Meßgröße abhängen und einer Korrekturschaltungsanordnung zugeführt werden, die einen von meßgrößenabhängigen Signalen beaufschlagten Analog-Dgital-Umsetzer (20) aufweist, dessen Ausgänge an die Adresseneingänge eines Speichers (21) angeschlossen sind, in dem adressenabhängig Korrektur-Digitalwerte gespeichert sind und dessen Ausgänge mit einem Digital-Analog-Umsetzer (22) verbunden sind, **dadurch gekennzeichnet,** daß als Sensor ein beheizbarer Widerstandstemperaturfühler (2) in einem Zweig einer Brückenschaltung (1) angeordnet ist, an deren Brückendiagonale ein Differenzverstärker (6) angeschlossen ist, dem ein die Betriebsspannung an der Brückenschaltung (1) beeinflussendes Stellglied nachgeschaltet ist, das zwischen einem Anschluß (9) der Brückenschaltung (1) und einer von einem Pol (12) einer Betriebsspannungsquelle (24) gespeisten Leitung (11) angeordnet ist, an die ein Eingang (16) der Korrekturschaltungsanrodnugn (15) angeschlossen ist, welche über einen Ausgang (17) gemeinsam mit dem anderen Anschluß (8) der Brückenschaltung (1) an eine weitere Leitung (14) angeschlossen ist, die über einen Stromfühler (25) mit dem anderen Pol (13) der Betriebsspannungsquelle (24) verbunden ist, daß die Korrektur-Digitalwerte im Speicher (21) auf eine einheitliche, bauteiletoleranzunabhängige Kennlinie für den Widerstandstemperaturfühler (2) eingesetllt sind, daß dem Digital-Analog-Umsetzer (22) ein Spannungs-Strom-Wandler (23) nachgeschaltet ist, dessen Ausgang mit dem Ausgang der Korrekturschaltung (15) verbunden ist, und daß der Widerstandstemperaturfühler (2) mit dem oder den Eingängen des Analog-Digital-Umsetzers (20) verbunden ist.

2. Vorrichtung nach Anspruch 1, **dadurch gekennzeichnet,** daß im Speicher (21) adressenabhängig Korrekturwerte kombiniert mit Werten zur Linearisierung der Kennlinie gespeichert sind.

3. Vorrichtung nach einem der Ansprüche 1 oder 2, **dadurch gekennzeichnet,** daß dem bzw. den Eingängen (19) des Analog-Digital-Umsetzers (20) ein Differenzverstärker vorgeschaltet ist, der vom Ausgangssignal des Widerstandstemperaturfühlers (2) eine einstellbar Offset-Spannung abzieht.

4. Vorrichtung nach einem der Ansprüche 1 bis 3, **dadurch gekennzeichnet,** daß der Widerstandstemperaturfühler (2) Bestandteil eines eine Regelschaltung enthaltenden Hitzdraht- oder Heißfilmanemometers ist, und daß eine dem Brückenstrom proportionale Spannung an den oder die Eingänge des Analog-Digital-Umsetzers (19) gelegt ist.

## Claims

1. An apparatus for producing a corrected characteristic for sensors which release signals either directly or via a following arrangement, the signals being dependent on a variable quantity and being fed to a correcting circuit arrangement comprising an analog-digital converter (20) to which quantity-dependent signals are applied and of which the outputs are connected to the address inputs of a memory (21) in which digital correction values are stored according to address and of which the outputs are connected to a digital-analog converter (22), characterized in that the sensor is a heatable resistance temperature sensor (2) arranged in one branch of a bridge circuit (1) to the bridge diagonals of which is connected a differential amplifier (6) followed by a control element which influences the operating voltage at the bridge circuit (1) and which is arranged between a terminal (9) of the bridge circuit (1) and a line (11) which is fed by a terminal (12) of an operating voltage source (24) and to which is connected one input (16) of the correcting circuit arrangement (15) which is connected via an output (17) - together with the other terminal (8) of the bridge circuit (1) - to another line (14) which is connected by a current sensor (25) to the other terminal (13) of the operating voltage source (24); in that the digital correction values are set in the memory (21) to a single characteristic for the resistance temperature sensor (2) which is unaffected by any component tolerances; in that the digital-analog converter (22) is followed by a voltage-current transformer (23) of which the output is connected to the output of the correcting circuit (15) and in that the resistance temperature sensor (2) is connected to the input(s) of the analog-digital converter (20).

2. An apparatus as claimed in claim 1, characterized in that correction values combined with values for linearizing the characteristic are stored according to address in the memory (21).

3. An apparatus as claimed in claim 1 or 2, characterized in that the input(s) (19) of the analog-digital converter (20) is/are preceded by a differential amplifier which extracts a variable offset voltage from the output signal of the resistance temperature sensor (2).

4. An apparatus as claimed in any of claims 1 to 3, characterized in that the resistance temperature sensor (2) is part of a hot-wire or hot-film anemometer containing a control circuit and in that a voltage proportional to the bridge current is applied to the input(s) of the analog-digital converter (19).

## Revendications

1. Dispositif pour la création d'une courbe caractéristique corrigée pour des capteurs, qui délivrent respectivement des signaux directement ou par un dispositif branché à la suite, signaux qui dépendent d'une grandeur de mesure variable et sont amenés à un dispositif de montage de correction, qui comprend un convertisseur analogique-numérique (20), dont les sorties sont reliées aux entrées d'adresses d'une mémoire (21), dans laquelle sont stockées des valeurs numériques de correction en fonction des adresses et dont les sorties sont reliées à un convertisseur numérique-analogique (22), caractérisé :

- en ce que comme capteur est disposée une sonde de température de résistance chauffable (2) dans une branche d'un montage en pont (1), sur les diagonales duquel un amplificateur différentiateur (6) est branché, auquel est relié en aval un composant de réglage influençant la tension de service sur le montage en pont (1), composant qui est placé entre une connexion (9) du montage en pont (1) et une ligne (11) alimentée par un pôle (12) d'une source de tension de service (24), ligne à laquelle est reliée une entrée (16) du dispositif de montage de correction (15), lequel est relié par une sortie (17) à l'autre connexion (8) du montage en pont (1) par une autre ligne (14), qui est liée par un détecteur de courant à l'autre pôle (13) de la source de tension de service (24),

- en ce que les valeurs numériques de correction sont ajustées dans la mémoire (21) sur une courbe caractéristique uniforme, indépendante de la tolérance des éléments de construction pour la sonde de température de résistance (2),
- en ce qu'un transformateur de tension du courant (23) est branché en aval du convertisseur numérique-analogique, transformateur dont la sortie est connectée à la sortie du circuit de correction (15), et,
- en ce que le capteur de température de résistance (2) est relié avec la ou les entrées du convertisseur analogique-numérique (20).

2. Dispositif selon la revendication 1, caractérisé en ce que dans la mémoire (21) sont stockées des valeurs de correction en fonction des adresses, en combinaison avec des valeurs pour l'atténuateur des distorsions non linéaires.

3. Dispositif selon l'une des revendications 1 ou 2, caractérisé en ce qu' à l'entrée ou aux entrées (19) du convertisseur analogique-numérique (20) est branché un amplificateur-différentiateur qui retire du signal de sortie du capteur de température de résistance (2) une tension de décalage de façon réglable.

4. Dispositif selon l'une des revendications 1 à 3, caractérisé :
- en ce que le capteur de température de résistance (2) est un élément constitutif d'un anémomètre à fil chaud ou film chaud contenant un circuit de réglage, et
- en ce qu'une tension proportionnelle au courant en pont est appliquée à la ou aux entrées (19) du convertisseur analogique-numérique (20).

EP 0 274 573 B1

FIG.1

FIG.2